# EUROPEAN PATENT SPECIFICATION

(11) **EP 4 200 166 B1**
(45) Date of publication and mention of the grant of the patent: **09.04.2025**
(21) Application number: 22741417.4
(22) Date of filing: 01.02.2022
(51) Int. Cl.: B60S 1/32, B60J 10/75

(54) **CAR EXTERIOR WIPER BLADE SYSTEM WITH CAMERA INTEGRATION**
FAHRZEUGAUSSENWISCHERBLATTSYSTEM MIT KAMERAINTEGRATION
SYSTÈME DE LAME D'ESSUYAGE EXTÉRIEUR DE VOITURE AVEC INTÉGRATION DE CAMÉRA

(30) Priority: 30.09.2021 TR 202115303
(43) Date of publication of application: 28.06.2023
(73) Proprietor: Standard Profil Ege Otomotiv Sanayi Ve Ticaret Anonim Sirketi, Kagithane/Istanbul (TR)
(72) Inventor: ÖZDEN, Murat Can, 81620 Düzce (TR); SAF, Orçun, ¿stanbul (TR)
(74) Representative: Yamankaradeniz, Kemal
(86) International application number: PCT/TR2022/050087
(87) International publication number: WO 2023/055315

(56) References cited:
- WO-A1-2019/038076
- WO-A1-2019/038076
- US-A1- 2017 151 933
- US-A1- 2019 143 899
- US-A1- 2020 139 799

## Description

### Technical Field of the Invention

The invention relates to a vehicle exterior wiper blade system with a camera-integrated translucent thermoplastic elastomer (TPE) signal region for use in motor vehicles.

In particular, the invention relates to a vehicle exterior wiper blade system with a transparent thermoplastic elastomer (TPE) signal zone and integration of a camera that allows the driver to observe the traffic situation with the exterior glass sealing element that seals the vehicles.

### Present State of the Art

Vehicle side exterior imaging systems and exterior glass sealing systems are used to perform individual functions in the present art. The side exterior imaging systems in the vehicles mainly consist of an external imaging system (camera) mounted on the vehicle doors and a display in which the images obtained by said imaging system are transferred to the vehicle interior environment. Exterior glass sealing systems include elements in which polymer-based materials are designed in a structure suitable for sealing conditions. These sealing elements provide insulation of the interior environment by removing the relationship between the glass and the exterior environment.

Vehicle side exterior imaging systems and exterior glass sealing systems perform their own individual functions and are mounted on the vehicle separately. Processing is carried out on the door metals for mounting the imaging systems to the door assembly. In addition, the exterior coating parts of the imaging system are formed by mounting more than one plastic material to each other. There was a need for systems integrated with the imaging system on exterior glass sealing systems in the known state of the art for this reason.

Patent Application No. KR20200143840 may be shown as an example of the state of the art as a result of the research conducted on the literature. The said document relates to a side camera for the vehicle that allows the user to control a blind spot while driving with a camera attached to the left and right door panels for safe driving. The said invention refers to a side camera comprising a camera body attached to the edge of the fender adjacent to the door panel of the vehicle, a cable taken under the camera body and entering between the fender and the door panel without being exposed to the outside and a camera module attached to the camera body. Thus, a camera that is attached externally to the door panel without being integrated into any sealing element is introduced on the vehicle in the said invention.

Patent Application No. US2020139799 may be shown as another example of the state of the art as a result of the research conducted on the literature. The said document relates to a motor vehicle sealing module. The sealing module comprises at least one long profile and at least one gasket configured to work with a glass of the vehicle. Furthermore, the said profile has a support to support at least one electronic equipment, such as a camera. However, the sealing module does not have a translucent material in the signal region and a polymer material with electrical conductivity in the electrical transmission.

Consequently, the foregoing problems and insufficient solutions thereof require making an improvement in the related technical field.

### Object of the invention

The present invention relates to a camera-integrated vehicle exterior wiper blade system which eliminates the foregoing disadvantages and offers novel advantages to the related technical field.

The main object of the invention is to provide a system that integrates and uses the camera that allows the driver to observe the traffic situation with the exterior glass sealing element that seals the vehicles.

The object of the invention is to reduce the assembly workmanship used in the assembly of two different main assemblies in the vehicle assembly line by eliminating the need for more than one plastic closure parts thanks to the integration of the imaging system on the sealing element.

Another object of the invention is to ensure that the imaging system and also the vehicle signaling system are carried out by a single manufacturing process in a reservoir on the exterior glass sealing element.

Another object of the invention is to minimize the wind noise, which is one of the vehicle noise sources, and to provide NVH (Noise, Vibration & Harshness) feature in the vehicle by manufacturing the vehicle signal system from translucent thermoplastic elastomer (TPE) material and the reservoir containing the said signal system and the imaging system in accordance with the operating conditions. Another object of the invention is to reduce the number of parts by increasing the production efficiency with a single process in manufacturing by performing the imaging system and signal system connections with polymer material with electrical conductivity instead of electronic fittings.

The invention relates to a vehicle exterior wiper blade system used in motor vehicles in order to fulfill all the purposes that may arise from the above-mentioned and detailed description, characterized in that it comprises the following elements:
- an exterior glass sealing element that seals between the interior and the exterior of the vehicle,
- at least one reservoir on the exterior glass sealing element in one piece,
- a camera for instantaneous display of the traffic situation behind the vehicle in the reservoir,
- a side signal light compartment made of translucent Thermoplastic Elastomer (TPE) material that provides the return signal of the vehicle in the reservoir,
- an upper cover, which is closed on the reservoir and seals the camera,
- a conductive polymer having high electrical conductivity for power transmission providing electrical connection of camera and side signal light compartment,
- a display that allows the driver to see the snapshots transferred from the camera in the vehicle.

The structural and characteristic features and all the advantages of the invention will be understood more clearly by reference to the following figures and the detailed explanation thereof. Therefore, the evaluation should be made by taking these figures and detailed explanations into consideration.

### Figures for a Better Understanding of the Invention

**Figure 1** is a representative perspective view of the vehicle exterior wiper blade system of the invention.
**Figure 2** is the subject of the invention is the representative upper view of the vehicle exterior wiper blade system.

### List of the Reference Numbers

**10.** Exterior glass sealing element
**20.** Reservoir
**30.** Camera
**40.** Side signal light compartment
**50.** Upper cover
**60.** Conductor polymer
**70.** Display

### Detailed Description of the Invention

The preferred alternatives of the vehicle exterior wiper blade system of the present invention are merely explained for a better understanding of the subject of the present invention.

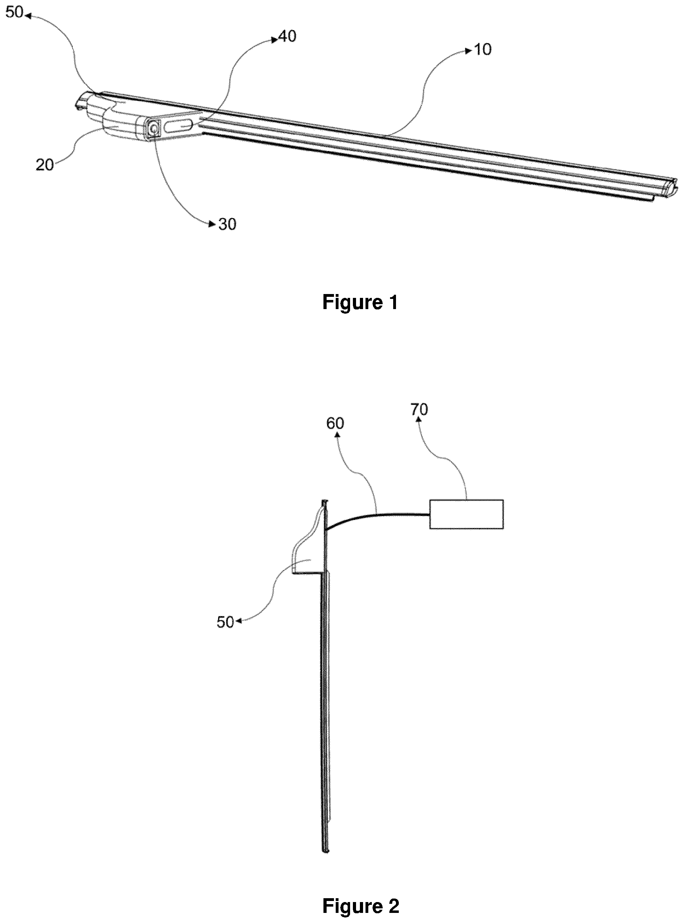

The representative view of the vehicle exterior wiper blade system of the invention is given in Figure 1. Accordingly, the vehicle exterior wiper blade system in its most basic form comprises an exterior glass sealing element (10) that seals between the inner environment of the vehicle and the exterior environment of the vehicle, at least one reservoir (20) on the exterior glass sealing element (10), the camera (30) that provides instantaneous display of the traffic status behind the vehicle in the reservoir (20), the side signal light compartment (40) that provides the return signal of the vehicle in the reservoir (20), the upper cover (50) closed on the reservoir (20), the conductive polymer (60) that provides the electrical connection of the camera (30) and the side signal light compartment (40), the display (70) that allows the driver to see the images transferred from the camera (30).

The exterior glass sealing element (10), which forms the main structure of the vehicle exterior wiper blade system, is made of polymer material and has a reservoir (20) on it. The exterior glass sealing element (10) and the reservoir (20) are in one piece. The reservoir (20) has been designed in accordance with NVH (Noise, Vibration & Harshness) performance, taking into account the operating conditions of the vehicle. Thus, the wind noise, which is one of the vehicle noise sources, is minimized.

The reservoir (20) comprises at least one camera (30) for instantaneous display of the traffic situation behind the vehicle and a side signal light compartment (40) for transmitting the return signal of the vehicle. The side signal light compartment (40) is made of translucent Thermoplastic Elastomer (TPE) material.

An upper cover (50) is sealed on the reservoir (20) to protect the camera (30) from external factors in the reservoir (20).

The electrical connection of the camera (30) and the side signal light compartment (40) in the reservoir (20) with the vehicle is provided by means of a conductive polymer (60) having high electrical conductivity for power transmission.

Snapshots of the traffic situation behind the vehicle provided with the camera (30) are seen by the driver through the display (70) placed in the vehicle as seen in Figure 2.

*The use of the vehicle exterior wiper blade system of the invention is as follows;*
The exterior glass sealing element (10), which is in one piece with the reservoir (20), is mounted on the vehicle. The electrical connections of the camera (30) and the side signal light compartment (40) are completed by means of a conductive polymer (60). The display (70) is placed in the vehicle. The vehicle's direction of rotation signal is given by the side signal light compartment (40) and the snapshots of the traffic situation behind the vehicle provided with the camera (30) are monitored by the driver through the display (70) during the use of the vehicle.

## Claims

1. A vehicle exterior wiper blade system for use in motor vehicles ***comprising*** the following elements:
- an exterior glass sealing element (10) that seals between the interior and the exterior of the vehicle,
- at least one reservoir (20) on the exterior glass sealing element (10) in one piece,
- a camera (30) for instantaneous display of the traffic situation behind the vehicle in the reservoir (20),
- a display (70) that allows the driver to see the snapshots transferred from the camera (30) in the vehicle,
**characterised in that** the vehicle exterior wiper blade system comprises the further elements:
- a side signal light compartment (40) made of translucent Thermoplastic Elastomer (TPE) material that provides the return signal of the vehicle in the reservoir (20),
- an upper cover (50), which is closed on the reservoir (20) and seals the camera (30),
- a conductive polymer (60) having high electrical conductivity for power transmission providing electrical connection of camera (30) and side signal light compartment (40),

2. The vehicle exterior wiper blade system according to claim 1, **characterized in that** the said sealing member (10) is made of polymer material.

3. The vehicle exterior wiper blade system according to claim 1, **characterized in that** said reservoir (20) is made of polymer material.

## Patentansprüche

1. Fahrzeugaußenwischerblattsystem zur Verwendung in Kraftfahrzeugen, ***umfassend*** die folgenden Elemente:
- ein Außenglasabdichtelement (10), das zwischen dem Inneren und dem Äußeren des Fahrzeugs abdichtet,
- zumindest einen Behälter (20) an dem Außenglasabdichtelement (10) in einem Stück,
- eine Kamera (30) zur sofortigen Anzeige der Verkehrssituation hinter dem Fahrzeug in dem Behälter (20),
- eine Anzeige (70), die dem Fahrer ermöglicht, die Schnappschüsse zu sehen, die von der Kamera (30) in dem Fahrzeug übertragen werden,
**dadurch gekennzeichnet, dass** das Fahrzeugaußenwischerblattsystem die weiteren Elemente umfasst:
- ein Seitensignallichtfach (40) bestehend aus lichtdurchlässigem thermoplastischen Elastomer (TPE-)Material, welches das Rückgabesignal des Fahrzeugs in dem Behälter (20) bereitstellt,
- eine obere Abdeckung (50), die an dem Behälter (20) geschlossen ist und die Kamera (30) abdichtet,
- ein leitendes Polymer (60) mit hoher elektrischer Leitfähigkeit zur Leistungsübertragung, das elektrische Verbindung von Kamera (30) und Seitensignallichtfach (40) bereitstellt.

2. Fahrzeugaußenwischerblattsystem nach Anspruch 1, **dadurch gekennzeichnet, dass** das Dichtelement (10) aus Polymermaterial besteht.

3. Fahrzeugaußenwischerblattsystem nach Anspruch 1, **dadurch gekennzeichnet, dass** der Behälter (20) aus Polymermaterial besteht.

## Revendications

1. Système de lame d'essuie-glace extérieur de véhicule destiné à être utilisé dans des véhicules à moteur ***comprenant*** les éléments suivants :
- un élément d'étanchéité extérieur en verre (10) assurant l'étanchéité entre l'intérieur et l'extérieur du véhicule,
- au moins un réservoir (20) sur l'élément d'étanchéité extérieur en verre (10) d'un seul tenant,
- une caméra (30) destinée à l'affichage instantané de la situation de circulation derrière le véhicule dans le réservoir (20),
- un dispositif d'affichage (70) qui permet au conducteur de voir les instantanés transférés depuis la caméra (30) dans le véhicule,
**caractérisé en ce que** le système de lame d'essuie-glace extérieur du véhicule comprend les éléments supplémentaires :
- un compartiment de feu de signalisation latéral (40) réalisé en matériau élastomère thermoplastique (TPE) translucide qui assure la signalisation de retour du véhicule dans le réservoir (20),
- un capot supérieur (50), qui se referme sur le réservoir (20) et assure l'étanchéité de la caméra (30),
- un polymère conducteur (60) comportant une conductivité électrique élevée destiné à la transmission d'énergie assurant une connexion électrique de la caméra (30) et du compartiment de feu de signalisation latéral (40).

2. Système de lame d'essuie-glace extérieur de véhicule selon la revendication 1, **caractérisé en ce que** ledit élément d'étanchéité (10) est réalisé en matériau polymère.

3. Système de lame d'essuie-glace extérieur de véhicule selon la revendication 1, **caractérisé en ce que** ledit réservoir (20) est réalisé en matériau polymère.
